# EUROPEAN PATENT APPLICATION

(11) **EP 4 674 632 A1**
(43) Date of publication of application: **07.01.2026**
(21) Application number: 25185481.6
(22) Date of filing: 26.06.2025
(51) Int. Cl.: B41J 11/00, B41J 13/00

(54) **PRINTING APPARATUS, CONTROL METHOD THEREOF, AND NON-TRANSITORY COMPUTER-READABLE STORAGE MEDIUM**

(30) Priority: 03.07.2024 JP 2024107637
(71) Applicant: CANON KABUSHIKI KAISHA, Tokyo 146-8501 (JP)
(72) Inventor: MURATA, Koki, Tokyo (JP)
(74) Representative: WESER & Kollegen Patentanwälte PartmbB

(57) **Abstract**

A printing apparatus, comprising a printing unit, a conveyance unit and a position detection unit, the position detection unit including a light emitting unit configured to emit light to a conveyance path of a print medium, a first light receiving unit configured to detect reflected light from the conveyance path, and a second light receiving unit configured to detect reflected light from the conveyance path, the first and the second light receiving units being arranged side by side with other in a direction crossing a conveyance direction of a print medium, and a position of a print medium in a direction crossing the conveyance direction is specified based on a difference signal between signals of the first and the second light receiving units.

## Description

### TECHNICAL FIELD

The present disclosure relates to mainly a printing apparatus.

### BACKGROUND

Japanese Patent Application Laid-Open No. 2004-182361 describes a technique of detecting a print medium using a light emitting element and a light receiving element in a printing apparatus such as an inkjet printer. According to Japanese Patent Application Laid-Open No. 2004-182361, the light emitting element emits light to the conveyance path of a print medium, and the light receiving element detects reflected light. Thus, the print medium is detected.

### SUMMARY

In the configuration described in Japanese Patent Application Laid-Open No. 2004-182361, the signal value of the light receiving element can fluctuate in accordance with the state of the print medium such as the posture and the environment such as external light in the conveyance path. Therefore, there is room for improvement in terms of improving detection accuracy.

Embodiments of the present disclosure have been made based on recognition of the above-described issue and provide a technique advantageous in improving detection accuracy of the position of a print medium in a printing apparatus.

The present disclosure in its first aspect provides a printing apparatus as specified in claim 1. Optional features are specified in claims 2 to 8.

The present disclosure in its second aspect provides a control method of a printing apparatus as specified in claim 9.

The present disclosure in its third aspect provides a non-transitory computer-readable storage medium as specified in claim 10.

Features of the present disclosure will become apparent from the following description of embodiments with reference to the attached drawings. The following description of embodiments are described by way of example.

### BRIEF DESCRIPTION OF THE DRAWINGS

Fig. 1 is a block diagram showing an example of the system configuration of a printing apparatus according to an embodiment.
Fig. 2 is a view showing a part of the internal structure of the printing apparatus.
Fig. 3 is a view for explaining an example of the configuration of a position detection unit.
Figs. 4A and 4B are views for explaining the reflection modes of emitted light.
Figs. 5a1, 5a2, 5b1, 5b2, 5c1, and 5c2 are views for explaining an example of a detection signal.
Fig. 6 is a view showing an example of the configuration of a differential signal output unit.
Figs. 7a1, 7a2, 7b1, 7b2, 7c1, and 7c2 are views for explaining examples of detection signals.
Fig. 8 is a view for explaining details of the detection signals.
Fig. 9 is a view for explaining an example of the configuration that can generate an interrupt job.
Fig. 10 is a view for explaining an interrupt job generation mode.
Fig. 11 is a flowchart for explaining an example of a method of detecting the position of a print medium.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### (Example of Configuration of Printing Apparatus)

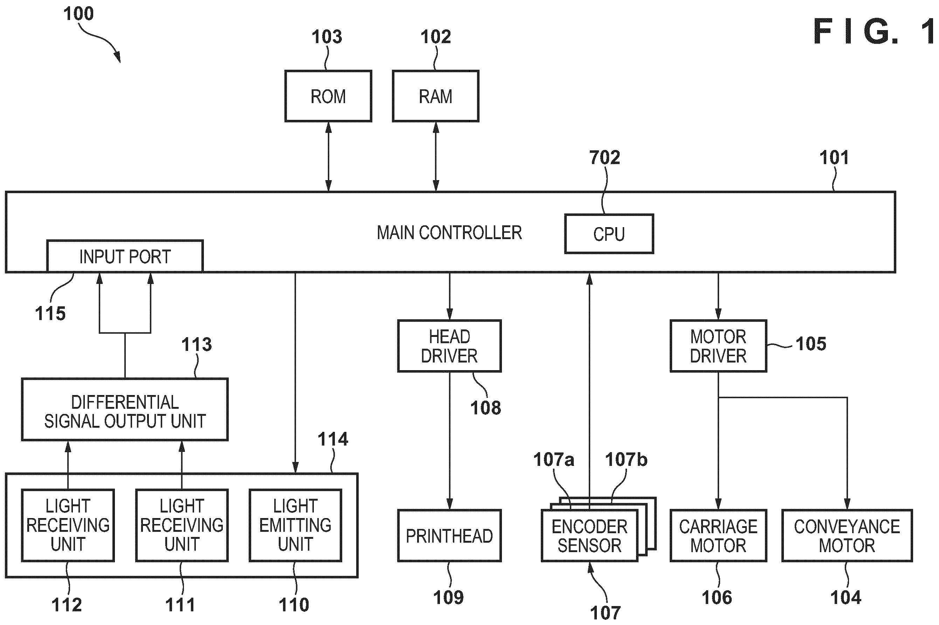

Fig. 1 is a block diagram showing the system configuration of a printing apparatus 100 according to an embodiment. In this embodiment, the printing apparatus 100 includes a conveyance motor 104, a motor driver 105, a carriage motor 106, two or more encoder sensors 107, a head driver 108, and a printhead 109.

The printing apparatus 100 further includes a differential signal output unit 113 and a position detection unit 114. As will be described later in detail, the position detection unit 114 includes a light emitting unit 110, a first light receiving unit 111, and a second light receiving unit 112, and the differential signal output unit 113 can output a signal corresponding to the difference between a signal from the light receiving unit 111 and a signal from the light receiving unit 112.

The printing apparatus 100 further includes a main controller 101, a random access memory (RAM) 102, and a read only memory (ROM) 103. As will be described later in detail, the main controller 101 includes an input port 115, and the input port 115 can accept signals of the light receiving units 111 and 112.

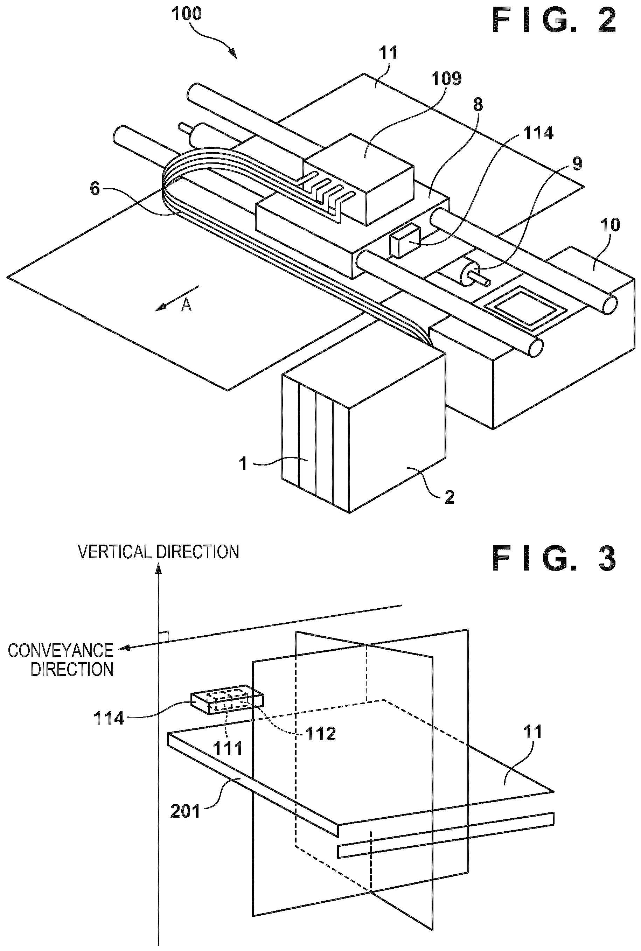

Fig. 2 is a view showing a part of the internal structure of the printing apparatus 100. The printing apparatus 100 further includes an ink tank 1, an ink tank holder 2, a supply tube 6, a carriage 8, a conveyance roller 9, and a recovery unit 10.

The motor driver 105 individually controls driving of the conveyance motor 104 and driving of the carriage motor 106. The conveyance roller 9 rotates by receiving power from the conveyance motor 104, and conveys a print medium 11 (a roll sheet in this embodiment) in a predetermined direction (a direction A in Fig. 2). The carriage 8 is installed slidably along guide rails extending in a direction substantially orthogonal to the conveyance direction of the print medium 11, and reciprocates in one direction by receiving power from the carriage motor 106. Note that the carriage 8 is detachably mounted with the printhead 109, and attached with the position detection unit 114.

Each of the two or more encoder sensors 107 is installed in a corresponding location in the printing apparatus 100.

One encoder sensor 107a detects the movement amount of the carriage 8. For example, a linear scale is provided on the above-described guide rail, and the encoder sensor 107a outputs a signal for specifying the movement amount of the carriage 8 based on the linear scale. Thus, the position of the carriage 8 and further the position of the printhead 109 can be specified.

The other encoder sensor 107b detects the rotation amount of the conveyance roller 9. For example, a rotary scale is provided on the conveyance roller 8, and the encoder sensor 107b outputs a signal for specifying the rotation amount of the conveyance roller 9 based on the rotary scale. Thus, the conveyance amount of the print medium 11 and further the position thereof can be specified.

A plurality of nozzles (ink discharge ports) are provided in the printhead 109. Based on a signal from the head driver 108, the printhead 109 discharges, from each nozzle, ink supplied from the ink tank 1 via the supply tube 6. The printhead 109 performs scanning in one direction by the reciprocation of the carriage 8, and discharges ink from each nozzle to the print medium 11 during the scanning, thereby performing printing.

Printing here indicates forming an image by the ink discharged onto the print medium 11, and the concept of an image includes a character, a number, a symbol, a graphic, and a photograph, and can also include a space formed around these.

Note that the ink tank 1 is replaceably attached to the ink tank holder 2. If the residual amount of the ink reaches a reference or less, the user can replace the ink tank 1 with another ink tank 1.

The main controller 101 is a system control unit that controls the entire system of the printing apparatus 100. In this embodiment, the main controller 101 includes a central processing unit (CPU) 702, and executes arithmetic processing for controlling driving of the above-described elements. A dynamic RAM (DRAM) or the like is typically used for the RAM 102. A solid state drive (SSD) or the like is typically used for the ROM 103. For example, the CPU 702 reads out a predetermined program from the ROM 103 and deploys the program and temporary data obtained by executing the program on the RAM 102 to generate a signal or data for implementing the function of the printing apparatus 100.

The main controller 101 drives the conveyance motor 104 by the motor driver 105, thereby driving the conveyance roller 9 to convey the print medium 11. The main controller 101 drives the carriage motor 106 by the motor driver 105, thereby reciprocating the carriage 8 to cause the printhead 109 to perform scanning. During scanning of the printhead 109, the main controller 101 drives the printhead 109 by the head driver 108.

In the configuration as described above, intermittent conveyance, in which the print medium 11 is conveyed by a predetermined amount and then the conveyance is suppressed, and scanning printing, in which the printhead 109 performs scanning and printing while the conveyance is suppressed, are repeatedly performed. Thus, printing on the print medium 11 is performed. Such the printhead 109 is expressed as a serial head. Printing on the print medium 11 is implemented by both the printhead 109 and the carriage 8, so that they may be collectively expressed as a printing unit.

The recovery unit 10 performs a recovery operation for recovering the function of the printhead 109. For example, when the printing apparatus 100 is activated and when a printing operation on the print medium 11 is completed, the carriage 8 moves to the position where the recovery unit 10 is arranged, and makes the printhead 109 face the recovery unit 10. In accordance with this, a recovery operation is performed.

### (Example of Method of Detecting Print Medium)

As described above, the position detection unit 114 includes the light emitting unit 110, the light receiving unit 111, and the light receiving unit 112. The light emitting unit 110 can emit light (emitted light) to the conveyance path of the print medium 11. Each of the light receiving unit 111 and the light receiving unit 112 can detect light (reflected light) reflected in the conveyance path of the print medium 11.

Fig. 3 is a view for explaining the configuration of the position detection unit 114. Here, for illustrative clarity, the light emitting unit 110 is not shown. The light receiving unit 111 and the light receiving unit 112 are arranged side by side along the conveyance direction of the print medium 11. That is, in a planar view, the direction in which the light receiving unit 111 and the light receiving unit 112 are arranged side by side and the direction in which a medium end face 201 of the print medium 11 extends are substantially orthogonal to each other.

In order to increase the detection accuracy of reflected light from the conveyance path of the print medium 11, for example, the light receiving unit 111 may include two or more light receiving elements. A known element may be used for each light receiving element. For example, a photoelectric conversion element is used.

The light receiving unit 111 and the light receiving unit 112 are configured to implement substantially the same performance. For example, in a case in which the light receiving unit 111 includes two or more light receiving elements arrayed at a predetermined interval in a predetermined direction, the light receiving unit 112 also includes the same number of light receiving elements arrayed at the same interval in the same direction. The two or more light receiving elements are arrayed, for example, along the conveyance direction of the print medium 11.

The two or more light receiving elements may be arrayed, for example, along a direction crossing the conveyance direction of the print medium 11. In this case, the end portion of the print medium 11 in the width direction (the direction crossing the conveyance direction) is detected.

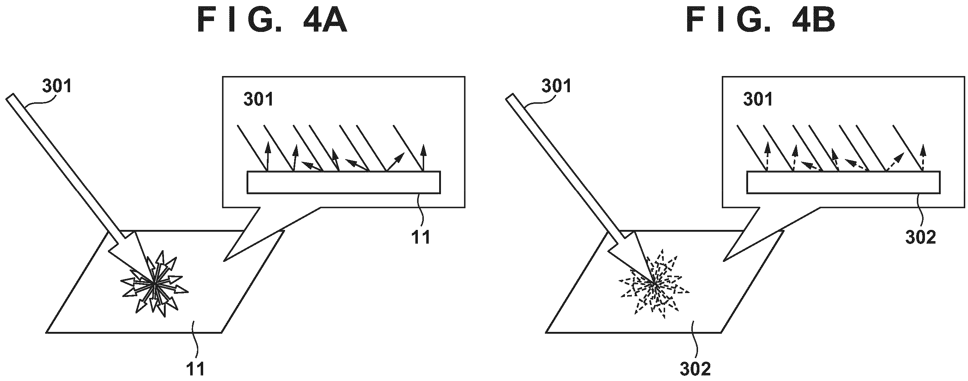

Figs. 4A and 4B are views for explaining the reflection mode of emitted light 301 from the light emitting unit 110. As shown in Fig. 4A, when the print medium 11 exists at the irradiation destination of the emitted light 301, the reflected light is substantially the light reflected by the print medium 11. On the other hand, as shown in Fig. 4B, when the print medium 11 does not exist at the irradiation destination of the emitted light 301, the reflected light is substantially the light reflected by a platen 302 that supports the print medium 11, from the opposite side, during printing by the printhead 109.

Since the print medium 11 and the platen 302 have different light reflectances, the light amount of the reflected light from the print medium 11 and the light amount of the reflected light from the platen 302 are different from each other. In this embodiment, assume that the light amount of the reflected light from the print medium 11 is larger than the light amount of the reflected light from the platen 302.

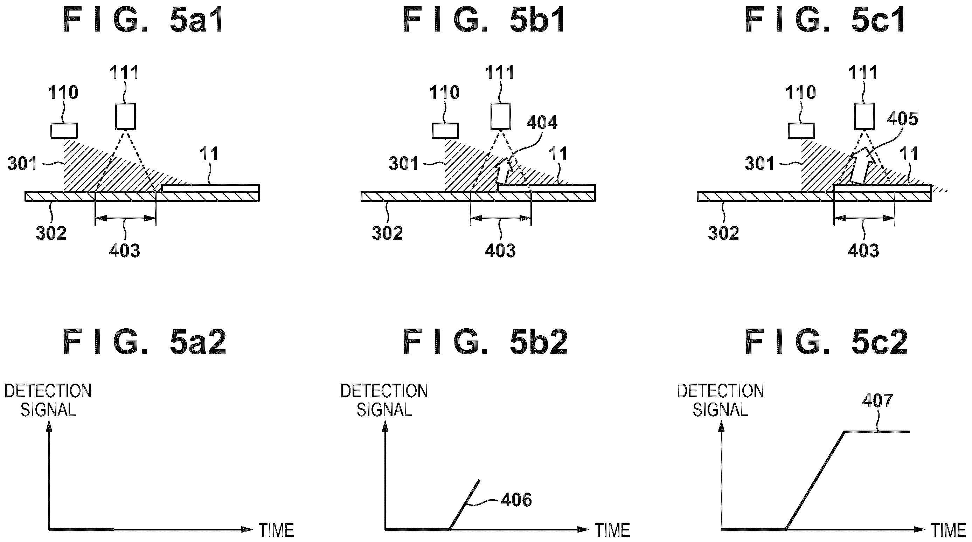

With reference to Figs. 5a1 to 5c2, the detection signal of the light receiving unit 111 will be described. The light receiving unit 111 outputs, as the detection signal, a current of the amount corresponding to the light amount of reflected light.

Fig. 5a1 shows a schematic side view in a case where the print medium 11 is not located in a detection region 403 of the light receiving unit 111. Fig. 5a2 shows the value of the detection signal of the light receiving unit 111 in the case shown in Fig. 5a1. Since substantially no reflected light exists in Fig. 5a1, the value of the detection signal of the light receiving unit 111 is substantially zero as shown in Fig. 5a2.

Fig. 5b1 shows a schematic side view in a case where a part of the print medium 11 is located in the detection region 403. Fig. 5b2 shows the value of the detection signal of the light receiving unit 111 in the case shown in Fig. 5a2. Since reflected light 404 is generated in Fig. 5a2, the value of the detection signal of the light receiving unit 111 increases as indicated by a waveform 406 in Fig. 5b2.

Fig. 5c1 shows a schematic side view in a case where the entire print medium 11 is located in the detection region 403. Fig. 5c2 shows the value of the detection signal of the light receiving unit 111 in the case shown in Fig. 5c1. Since reflected light 405 having a larger light amount than the reflected light 404 is generated in Fig. 5c1, the value of the detection signal of the light receiving unit 111 further increases, and then reaches a substantially maximum value as indicated by a waveform 407 in Fig. 5c2.

As can be seen from comparison of Fig. 5a2, Fig. 5b2, and Fig. 5c2, as the print medium 11 is conveyed by the conveyance roller 9 and the overlap area between the print medium 11 and the detection region 403 increases, the value of the detection signal of the light receiving unit 111 increases. This also applies to the light receiving unit 112.

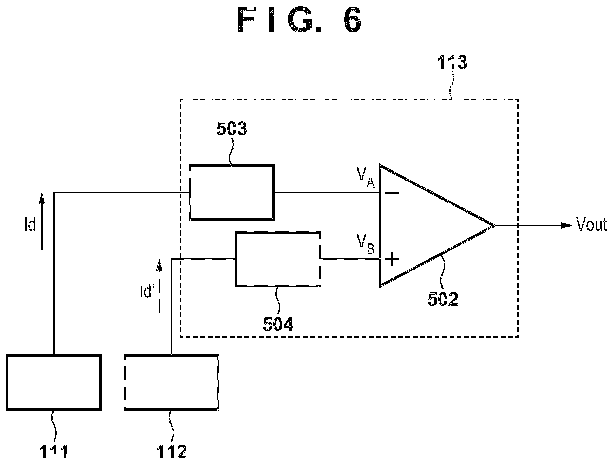

Fig. 6 is a view showing the configuration of the differential signal output unit 113. In this embodiment, the differential signal output unit 113 includes a differential amplification circuit 502, a current-voltage conversion circuit 503, and a current-voltage conversion circuit 504. The current-voltage conversion circuit 503 performs current-voltage conversion of a current Id output from the light receiving unit 111, and outputs a voltage V_{A}. Similarly, the current-voltage conversion circuit 504 performs current-voltage conversion of a current Id' output from the light receiving unit 112, and outputs a voltage V_{B}. The voltage V_{A} and the voltage V_{B} are input to the differential amplification circuit 502.

The differential amplification circuit 502 outputs, as a voltage Vout, a voltage based on the difference between the voltage V_{A} and the voltage V_{B}. In this manner, the differential signal output unit 113 outputs a difference signal between the detection signal of the light receiving unit 111 and the detection signal of the light receiving unit 112.

Note that the amplification factor of the differential amplification circuit 502 may be a fixed value, or may be a variable value that can be adjusted by the main controller 101.

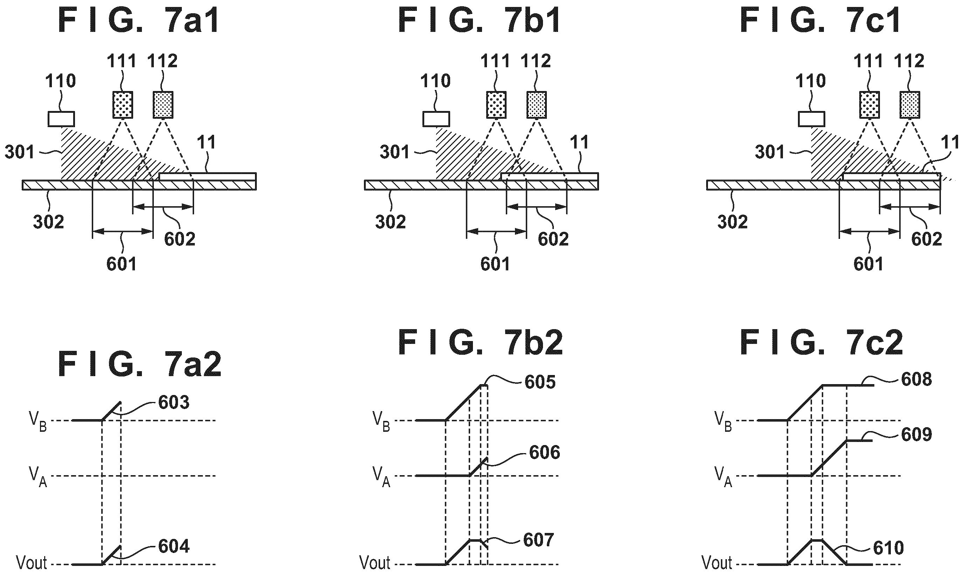

Fig. 7a1, Fig. 7b1, and Fig. 7c1 are views respectively showing Fig. 5a1, Fig. 5b1, and Fig. 5c1 for both the light receiving unit 111 and the light receiving unit 112. Fig. 7a2, Fig. 7b2, and Fig. 7c2 show the detection signals of the light receiving units 111 and 112 and the voltage Vout, which is the difference signal between the detection signals, in the cases shown in Fig. 7a1, Fig. 7b1, and Fig. 7c1, respectively.

Fig. 7a1 shows a state in which the print medium 11 is not located in a detection region 601 of the light receiving unit 111 and a part of the print medium 11 is located in a detection region 602 of the light receiving unit 112. In Fig. 7a1, there is substantially no reflected light detected by the light receiving unit 111, but reflected light detected by the light receiving unit 112 is generated. Therefore, as shown in Fig. 7a2, the value (voltage V_{A}) of the detection signal of the light receiving unit 111 is substantially zero but the value (voltage V_{B}) of the detection signal of the light receiving unit 112 increases as indicated by a waveform 603 in Fig. 7a2. Accordingly, the voltage Vout as the difference signal increases as indicated by a waveform 604 in Fig. 7a2.

Fig. 7b1 shows a state in which a part of the print medium 11 is located in the detection region 601 and the entire print medium 11 is located in the detection region 602. In Fig. 7b1, reflected light detected by the light receiving unit 111 is generated, and the light amount of the reflected light detected by the light receiving unit 112 further increases and then reaches a substantially maximum value. Therefore, the value of the detection signal of the light receiving unit 111 increases as indicated by a waveform 606 in Fig. b2, and the value of the detection signal of the light receiving unit 112 further increases and then reaches a substantially maximum value as indicated by a waveform 605 in Fig. 7b2,. Accordingly, the voltage Vout further increases, reaches a substantially maximum value, and then decreases as indicated by a waveform 607 in Fig. 7b2,.

Fig. 7c1 shows a state in which the entire print medium 11 is located in each of the detection regions 601 and 602. InFig. 7c1, the light amount of reflected light detected by the light receiving unit 112 has already reached the substantially maximum value, and the light amount of the reflected light detected by the light receiving unit 111 reaches the substantially maximum value after the light receiving unit 112. Therefore, the value of the detection signal of the light receiving unit 112 maintains the substantially maximum value as indicated by a waveform 608 in Fig. 7c2, and the value of the detection signal of the light receiving unit 111 further increases and then reaches the substantially maximum value as indicated by a waveform 609 in Fig. 7c2. Accordingly, the voltage Vout further decreases and becomes substantially zero as indicated by a waveform 610 in Fig. 7c2.

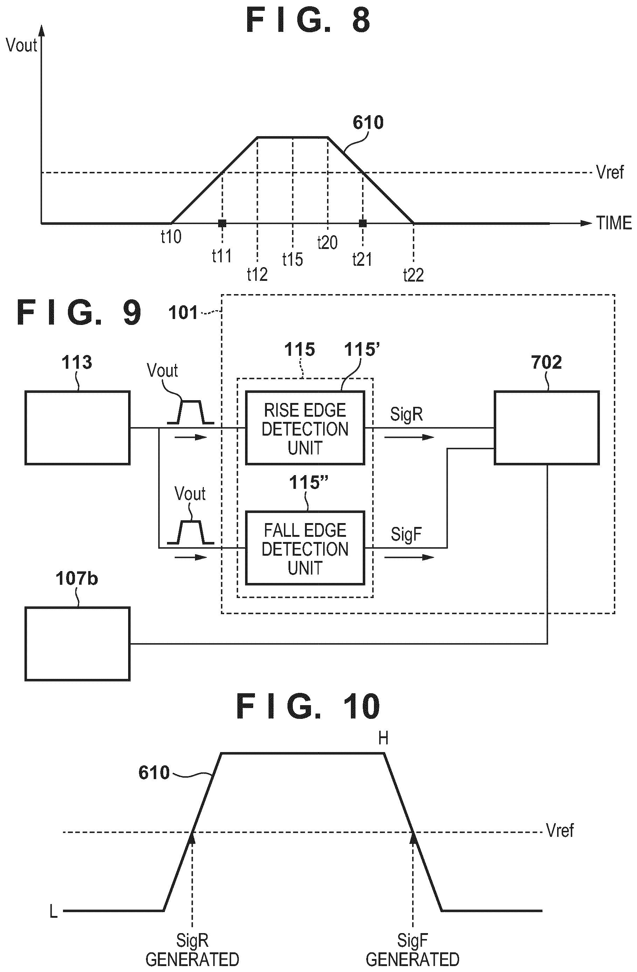

Fig. 8 is a view for explaining the processing result of the detection signals, which is an enlarged view based on the waveform 610 in Fig. 7c2. In Fig. 8, the abscissa represents the time, and the ordinate represents the value of the voltage Vout.

Time t10 corresponds to the timing at which the voltage Vout starts to change from L level (low level) to H level (high level). Time t12 corresponds to the timing at which the change is completed. Time t11 corresponds to any timing between time t10 and time t12, at which the voltage Vout matches a reference voltage Vref. Details will be described later.

Time t20 corresponds to the timing at which the voltage Vout starts to change from H level to L level. Time t22 corresponds to the timing at which the change is completed. Time t21 corresponds to any timing between time t20 and time t22, at which the voltage Vout matches the reference voltage Vref. Details will be described later.

In this embodiment, the timing at which the position detection unit 114 is considered to detect the medium end face 201 of the print medium 11 is associated with time t15, which is the intermediate timing between time t11 and time t21, and the position of the print medium 11 is specified based on this.

Here, the timing at which the position detection unit 114 is considered to detect the medium end face 201 may be decided based on the voltage Vout as the difference signal. Therefore, this timing may be associated with the intermediate timing between the time when the voltage Vout passes a predetermined value during changing from L level to H level and the timing when the voltage Vout passes the same value during changing from H level to L level. Accordingly, as another embodiment, this timing may be associated with the intermediate timing between time t10 and time t22, or the intermediate timing between time t12 and time t20.

With the configuration as described above, the position detection unit 114 can detect the medium end face 201 of the print medium 11, and accordingly specify the position of the print medium 11. When one light receiving element is provided, the signal value of the light receiving element fluctuates in accordance with the state of the print medium such as the posture, and the environment such as external light in the conveyance path. By using the difference signal, it is possible to cancel the influences of the state and environment, thereby accurately detecting the end face position.

Note that the logic levels exemplarily shown here are not limited to this example. For example, in this embodiment, the voltage Vout before the print medium 11 passes the light receiving units 111 and 112 and the voltage Vout after the print medium 11 passes the light receiving units 111 and 112 are regarded to be in L level, and the voltage Vout after the print medium 11 passes the light receiving unit 112 but before it passes the light receiving unit 111 is regarded to be in H level. However, the former may be H level and the latter may be L level.

### (Generation of Interrupt Job)

Based on the result of specification of the position of the print medium 11 by the position detection unit 114 described above, the main controller 101 performs intermittent conveyance of the print medium 11 by the conveyance roller 9 and scanning printing by the printhead 109. Therefore, the configuration and control are required that can generate a predetermined interrupt job based on the result of specification, and interrupt conveyance of the print medium 11 by the conveyance roller 9 and start scanning printing by the printhead 109.

Fig. 9 is a view for explaining the configuration capable of generating an interrupt job in the main controller 101. In this embodiment, an input port 115 includes a rise edge detection unit 115' and a fall edge detection unit 115", and the voltage Vout is input to each of them. The rise edge detection unit 115' detects the rise edge (the change from L level to H level) of the voltage Vout. The fall edge detection unit 115" detects the fall edge (the change from H level to L level) of the voltage Vout. As will be described later in detail, the rise edge detection unit 115' and the fall edge detection unit 115" generate detection signal SigR and detection signal SigF, respectively, based on the voltage Vout, and provide the detection signals as interrupt jobs to a CPU 702.

Fig. 10 is a view for explaining an interrupt job generation mode, which is an enlarged view based on the waveform 610 in Fig. 7c2. The rise edge detection unit 115' detects that the voltage Vout changing from L level to H level becomes higher than the reference voltage Vref, and accordingly generates the detection signal SigR. The fall edge detection unit 115" detects that the voltage Vout changing from H level to L level becomes lower than the reference voltage Vref, and accordingly generates the detection signal SigF. Note that as the reference voltage Vref, an arbitrary voltage value between L level and H level may be set as a reference value. For example, the median between L level and H level is set. For each of the rise edge detection unit 115' and the fall edge detection unit 115", a comparator that performs magnitude comparison of the reference voltage Vref and the voltage Vout is typically used.

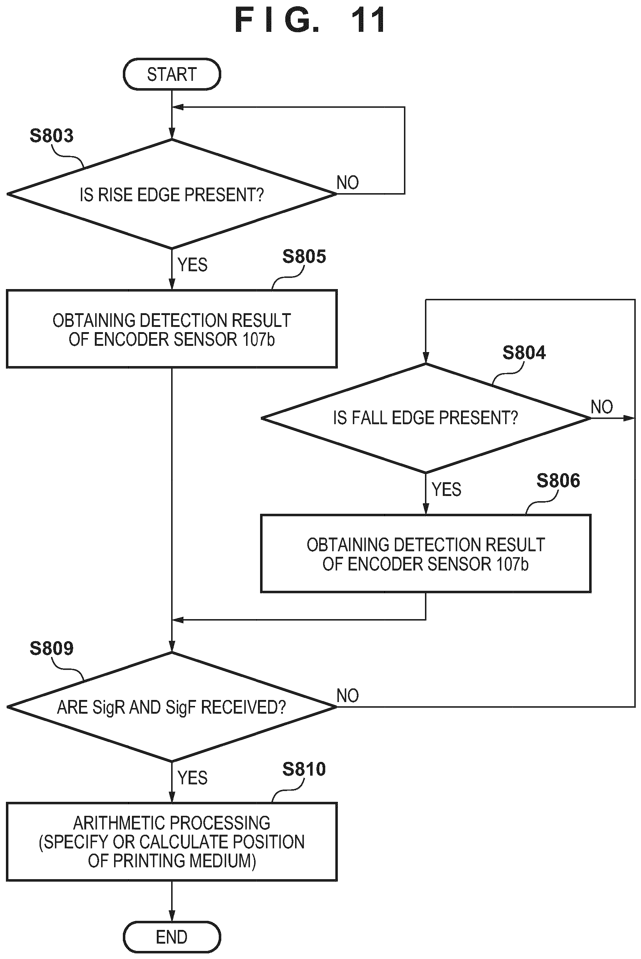

Fig. 11 is a flowchart showing an example of a method of detecting the position of the print medium 11 according to this embodiment. This flowchart is performed mainly by the CPU 702, and the outline thereof is that interrupt jobs are generated based on the detection results of the rise edge detection unit 115' and the fall edge detection unit 115", and the positions of the print medium 11 at those timings are specified.

In step S803 (to be simply referred to as "S803" hereinafter, and this also applies to remaining steps to be described later), the CPU 702 determines the presence/absence of the rise edge of the output voltage Vout of the differential signal output unit 113. This determination is implemented by the detection signal SigR of the rise edge detection unit 115'. If the rise edge of the voltage Vout is detected, the CPU 702 advances to S805; otherwise, the CPU 702 returns to S803.

In S805, in accordance with the reception of the detection signal SigR, the CPU 702 acquires the detection result of the encoder sensor 107b (the rotation amount of the conveyance roller 9, that is, the conveyance amount of the print medium 11) at that time, and then advances to S809.

In S809, the CPU 702 determines whether it has received both the detection signals SigR and SigF. If it has received both the detection signals SigR and SigF, the CPU 702 advances to S810; otherwise (that is, if it has not received the detection signal SigF), the CPU 702 advances to S804.

In S804, the CPU 702 determines the presence/absence of the fall edge of the output voltage Vout of the differential signal output unit 113. This determination is implemented by the detection signal SigF of the fall edge detection unit 115". If the fall edge of the voltage Vout is detected, the CPU 702 advances to S806; otherwise, the CPU 702 returns to S804.

In S806, in accordance with the reception of the detection signal SigF, the CPU 702 acquires the detection result of the encoder sensor 107b at that time in a procedure similar to that in S805, and then advances to S809.

In S810, the CPU 702 performs arithmetic processing based on the detection results of the encoder sensor 107b acquired in S805 and S806.

As described above, the detection signal SigR is generated when the voltage Vout changing from L level to H level becomes larger than the reference value Vref. This timing is time t11 in this embodiment (see Fig. 10), and corresponds to the timing at which the print medium 11 is not located in the detection region 601 of the light receiving unit 111 and a part of the print medium 11 is located in the detection region 602 of the light receiving unit 112, as can be seen from Fig. 7a1 and Fig. 7a2.

Similarly, the detection signal SigF is generated when the voltage Vout changing from H level to L level becomes smaller than the reference value Vref. This timing is at time t21 in this embodiment (see Fig. 10), and corresponds to the timing at which a part of the print medium 11 is located in the detection region 601 and the entire print medium 11 is located in the detection region 602, as can be seen from Fig. 7c1 and Fig. 7c2.

The position of the print medium 11 can be calculated based on the generation timings of the detection signals SigR and SigF, and the detection results (the conveyance amounts of the print medium 11) of the encoder sensor 107b associates with them. In this embodiment, it is considered that the medium end face 201 of the print medium 11 is detected at time t15 which is the intermediate timing between time t11 and time t21. Furthermore, the position of the print medium 11 can be specified based on the detection result of the encoder sensor 107b.

Note that as another embodiment, the position of the print medium 11 may be calculated based on positional information that can be associated with time t11 and time t21 (alternatively, time t10 and time t22, or time t12 and time t20). For example, the position of the medium end face 201 corresponding to each of time t11 and time t21 may be set in advance. In this case, when time t15 is calculated, the position of the print medium 11 can be specified.

According to the control as described above, it is possible to generate an interrupt job based on the result of specification of the position of the print medium 11 by the position detection unit 114, and based on it, it is possible to interrupt conveyance of the print medium 11 by the conveyance roller 9 and start scanning printing by the printhead 109. With the configuration in which the rise edge and fall edge of the voltage Vout can be individually detected by the rise edge detection unit 115' and the fall edge detection unit 115", the circuit operation is not switched during signal processing. Accordingly, the interrupt job described above can be generated more quickly and reliably with relatively simple configuration.

According to this embodiment, the position of the print medium 11 is detected based on the difference signal between the light receiving units 111 and 112 of the position detection unit 114. In the arithmetic processing during this, influences caused by the state of the print medium and the environment of the conveyance path are reduced. Therefore, according to this embodiment, it is advantageous in improving the detection accuracy of the position of the print medium 11. In addition, based on the detected position of the print medium 11, it is possible to appropriately generate an interrupt job for performing intermittent conveyance of the print medium 11 by the conveyance roller 9 and scanning printing by the printhead 109.

In this manner, since the end portion can be detected accurately, during image printing on a print medium, it is possible to discharge ink right up to the end portion of the print medium in the width direction without discharging ink to the outside of the print medium.

### (Program)

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

### (Others)

In the embodiments, each element is named using an expression based on its main function. However, each function described in the embodiments may be a sub-function, and is not strictly limited to the expression. The expression can be replaced with another similar expression. In the same vein, an expression "unit or portion" can be replaced with "tool", "component", "member", "structure", "assembly", or the like. Alternatively, these may be omitted or added.

Ink is not limited to a colored liquid containing a dye or a pigment, but may be a colorless transparent liquid, that is, ink is a liquid in a broad sense. In this viewpoint, the printing apparatus 100 may be expressed as a liquid discharge apparatus, and the printhead 109 may be expressed as a liquid discharge head.

In addition, two or more elements selectably exemplified in the embodiments are not strictly limited to the exemplification, and may arbitrarily be combined. For example, each of the two or more elements exemplified may be additionally selected or alternatively selected. As an example, when arbitrarily combining two elements A and B, to indicate one of "only A", "only B", and "both A and B", an expression "A and/or B" may be used, or an expression "at least one of A and B" may be used.

Various embodiments have been described in detail above but it will be understood that the present disclosure is not limited to these embodiments and encompasses all modifications, variants, alternatives and equivalents falling within the scope of the appended claims.

## Claims

1. A printing apparatus comprising:
a printing unit configured to perform printing on a print medium;
a conveyance unit configured to convey a print medium; and
a position detection unit configured to detect a position of a print medium, wherein
the position detection unit includes
a light emitting unit configured to emit light to a conveyance path of a print medium,
a first light receiving unit configured to detect reflected light from the conveyance path, and
a second light receiving unit configured to detect reflected light from the conveyance path, and arranged side by side with the first light receiving unit in a direction crossing a conveyance direction of a print medium, and
a control unit configured to control driving of each of the printing unit and the conveyance unit,
wherein the control unit specifies a position of a print medium in a direction crossing the conveyance direction based on a difference signal between a signal of the first light receiving unit and a signal of the second light receiving unit.

2. The printing apparatus according to claim 1,
wherein the control unit
specifies a position of a print medium based on the difference signal, and
controls driving of each of the printing unit and the conveyance unit based on a result of the specification.

3. The printing apparatus according to claim 2, wherein
in a case where a value of each of the difference signal before a print medium passes the first light receiving unit and the second light receiving unit and the difference signal after a print medium passes the first light receiving unit and the second light receiving unit is defined a first signal value,
a value of the difference signal after a print medium passes the first light receiving unit and before a print medium passes the second light receiving unit is defined as a second signal value,
a timing at which the difference signal changes from the first signal value to the second signal value is defined as a first time, and
a timing at which the difference signal changes from the second signal value to the first signal value is defined as a second time,
the control unit performs the specification based on the first time and the second time.

4. The printing apparatus according to claim 2, wherein
based on a result of the specification, the control unit interrupts conveyance of a print medium by the conveyance unit, and controls driving of the printing unit.

5. The printing apparatus according to claim 1, further comprising a difference signal output unit configured to output the difference signal.

6. The printing apparatus according to claim 5, wherein
the difference signal output unit includes a differential amplification circuit.

7. The printing apparatus according to claim 1, wherein
each of the first light receiving unit and the second light receiving unit is formed by arraying not less than two light receiving elements.

8. The printing apparatus according to claim 1, wherein
the printing unit includes
a printhead, and
a carriage mounted with the printhead, and configured to reciprocate in one direction to cause the printhead to perform scanning, and
the light emitting unit, the first light receiving unit, and the second light receiving unit are attached to the carriage.

9. A control method of a printing apparatus that comprises a printing unit configured to perform printing on a print medium, a conveyance unit configured to convey a print medium, and a position detection unit configured to detect a position of a print medium, wherein the position detection unit includes a light emitting unit configured to emit light to a conveyance path of a print medium, a first light receiving unit configured to detect reflected light from the conveyance path, and a second light receiving unit configured to detect reflected light from the conveyance path, and arranged side by side with the first light receiving unit in a conveyance direction of a print medium, the control method comprising:
outputting a difference signal between a signal of the first light receiving unit and a signal of the second light receiving unit;
specifying a position of a print medium based on the difference signal; and
controlling driving of the printing unit based on a result of the specification.

10. A non-transitory computer-readable storage medium storing a program configured to be executed by one or more processors of a printing apparatus that comprises a printing unit configured to perform printing on a print medium, a conveyance unit configured to convey a print medium, and a position detection unit configured to detect a position of a print medium, wherein the position detection unit includes a light emitting unit configured to emit light to a conveyance path of a print medium, a first light receiving unit configured to detect reflected light from the conveyance path, and a second light receiving unit configured to detect reflected light from the conveyance path, and arranged side by side with the first light receiving unit in a conveyance direction of a print medium, the program including instructions, which when executed by the one or more processors, cause the printing apparatus to perform a control method comprising:
outputting a difference signal between a signal of the first light receiving unit and a signal of the second light receiving unit;
specifying a position of a print medium based on the difference signal; and
controlling driving of the printing unit based on a result of the specification.
